# EUROPEAN PATENT SPECIFICATION

(11) **EP 3 538 417 B1**
(45) Date of publication and mention of the grant of the patent: **21.04.2021**
(21) Application number: 17800469.3
(22) Date of filing: 07.11.2017
(51) Int. Cl.: B62D 1/16, F16D 3/68

(54) **ALIGNMENT ASSEMBLY TO CORRECT MISALIGNMENT BETWEEN A STEERING COLUMN AND A HYDRAULIC STEERING UNIT**
AUSRICHTUNGSANORDNUNG ZUR KORREKTUR DER FEHLAUSRICHTUNG ZWISCHEN EINER LENKSÄULE UND EINER HYDRAULISCHEN LENKEINHEIT
ENSEMBLE D'ALIGNEMENT POUR CORRIGER UN DÉFAUT D'ALIGNEMENT ENTRE UNE COLONNE DE DIRECTION ET UNE UNITÉ DE DIRECTION HYDRAULIQUE

(30) Priority: 09.11.2016 IT 201600113091
(43) Date of publication of application: 18.09.2019
(73) Proprietor: CNH Industrial Italia S.p.A., 10135 Turin (IT)
(72) Inventor: MAGRINI, Sergio, 41100 Modena (IT)
(74) Representative: CNH Industrial IP Department
(86) International application number: PCT/EP2017/078501
(87) International publication number: WO 2018/087098

(56) References cited:
- EP-A1- 1 724 179
- DE-U1- 7 828 716
- US-A- 4 023 646

## Description

### BACKGROUND OF THE INVENTION

The present invention relates generally to work machines such as agricultural tractors, more particularly to hydraulic power steering systems for such work machines, and still more particularly to assemblies aligning the steering column with the hydraulic steering unit in the power steering systems of such work machines.

Work machines of many different types, such as agricultural tractors and other self-propelled implements, are provided with hydraulic steering systems to facilitate machine operation. Hydraulic steering systems lessen fatigue and enhance the comfort of an individual operating the implement. Modern work machines of these types frequently are provided with operator cabins for both safety and comfort of the operator.

A typical hydraulic steering system includes a hydraulic steering unit connected by hydraulic fluid lines to hydraulic actuators operatively connected to the steerable wheels. A steering column includes a steering wheel on a steering shaft, the steering shaft being connected mechanically to the hydraulic steering unit for controlling operation of the hydraulic steering system. The hydraulic steering unit is anchored to the operator cab, commonly on the outside thereof. The steering shaft extends from the steering wheel inside the cab to the hydraulic steering unit externally of the cab. A steering column support is connected to a steering column housing and to the wall of the operator cab to which the hydraulic steering unit is attached also.

Known hydraulic steering systems can provide difficult installations and assemblies, in that the operator cab is fabricated and attached to the work machine frame, the hydraulic steering unit is anchored to the frame and the cab and the steering column must align with the hydraulic steering unit, while being anchored to the operator cab. Even stack up of tolerances can create misalignment problems, which can be magnified by slight deviations from tolerances. Known hydraulic steering systems provide minimal angular articulation between the components thereof, and provide little or no axial adjustment along the length of the steering column. Since assembly tolerances for the steering column support in the cab can be quite narrow, during production it can be difficult to keep the distance between the position of the hydraulic steering unit on the wall of the operator cab and the steering column support on the cab within the tight tolerances that are common. Document EP1724179 A1 discloses the preamble of the independent claim.

Accordingly, it is desirable to have a steering column in a hydraulic steering system that is self-aligning and adjustable axially between the steering wheel and hydraulic steering unit, to facilitate assembly and installation of the power steering system within the operator cab of the work machine.

### SUMMARY OF THE INVENTION

The present invention provides a connection between a steering column of a power steering system in a work machine and the hydraulic steering unit of the power steering system. The present invention further provides axial adjustment along the length of the steering column within the length of the steering column support attached within the operator cab.

The invention in one form is directed to an alignment assembly for a power steering system with a hydraulic steering unit and a steering column including a steering shaft and a connection of the steering shaft to the hydraulic steering unit by way of the alignment assembly. The alignment assembly includes a connector disposed between the steering shaft and the hydraulic steering unit. The connector includes a distal end connected to the hydraulic steering unit and a proximal end connected to the steering column by a rolling connection.

The invention in another form is directed to an alignment assembly including a connector between a steering shaft and a hydraulic steering unit in the power steering system of a work machine that includes a connector between the steering shaft and the hydraulic steering unit, with a distal end connected to the hydraulic steering unit and a proximal end connected to the steering column by a rolling connection, with an axial adjustment configuration in the steering column.

An advantage of the alignment assembly is that it provides enhanced self-aligning features within a power steering system, and particularly between the connection of a steering column to a hydraulic steering unit.

Another advantage of the alignment assembly is that it provides adjustment of both the axial alignment of a steering column to a hydraulic steering unit and the axial length of the steering column.

Additional features and advantages of the invention will be made apparent from the following detailed description of illustrative embodiments that proceeds with reference to the accompanying drawings.

### BRIEF DESCRIPTION OF THE DRAWINGS

The above-mentioned and other features and advantages of this invention, and the manner of attaining them, will become more apparent and the invention will be better understood by reference to the following description of embodiments of the invention taken in conjunction with the accompanying drawings, wherein:
Fig. 1 is a schematic, fragmentary illustration of a work machine with a hydraulic power steering system in which the damper assembly disclosed herein can be used;
Fig. 2 is a perspective view of the power steering column of the power steering system;
Fig. 3 is an exploded view of a portion of the power steering system;
Fig. 4 is an elevational view of a portion of the power steering system;
Fig. 5 is a cross-sectional view of the portion of the power steering system shown in Fig. 4, taken along line 5-5 of Fig. 4;
Fig. 6 is a cross-sectional view of the portion of the power steering system shown in Fig. 5, taken along line 6-6 of Fig. 5;
Fig. 7 is a perspective view of the end of the damping assembly;
Fig. 8 is an end elevational view of the damping assembly;
Fig. 9 is an end elevational view similar to that of Fig. 8, but illustrating the damping assembly in a condition of clockwise rotation of the power steering system;
Fig. 10 is an end elevational view similar to those of Figs. 8 & 9, but illustrating the damping assembly in a condition of clockwise rotation of the power steering system;
Fig. 11 is a schematic, fragmentary illustration similar to Fig. 1, but illustrating several dimensional relationships;
Fig. 12 is an enlarged cross-sectional view of the alignment assembly shown in Fig. 5;
Fig. 13 is an enlarged cross-sectional view of the alignment assembly shown in Fig. 6; and
Fig. 14 is a further enlargement of a fragmentary portion of the alignment assembly shown in Fig. 12.

Corresponding reference characters indicate corresponding parts throughout the several views. The exemplifications set out herein illustrate embodiments of the invention, and such exemplifications are not to be construed as limiting the scope of the invention in any manner.

### DETAILED DESCRIPTION OF THE INVENTION

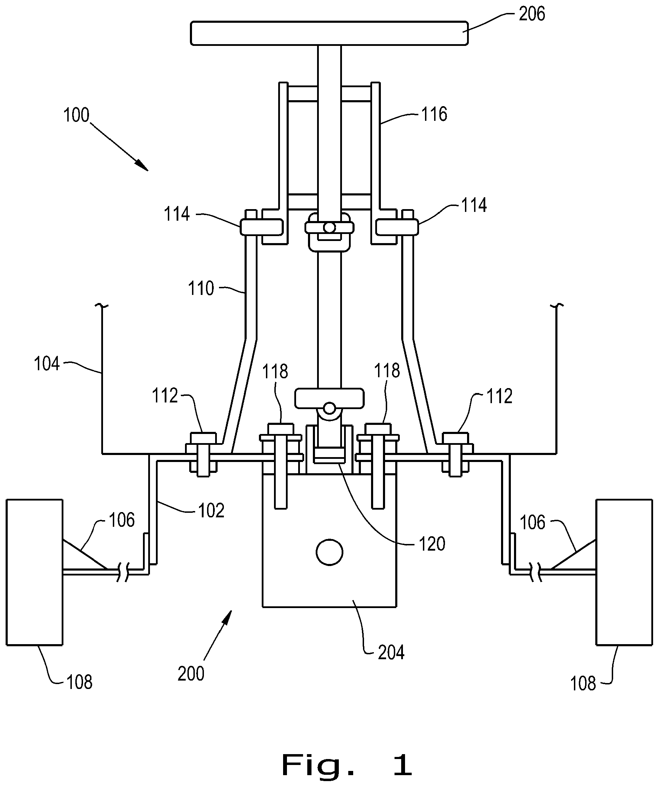

Referring now to the drawings, and more particularly to Fig. 1, there is shown in fragmentary, schematic illustration a work machine 100, such as an agricultural tractor 100, having a frame 102, an operator cab 104 attached to frame 102 and a power steering system 200 extending into operator cab 104 and operatively connected to hydraulic actuators 106 operating steerable wheels 108. The manner in which power steering system 200 is connected to steerable wheels 108 for the operation thereof is well known to those skilled in the art and will not be described further herein.

While the present application refers to an agricultural tractor as the work machine described, it should be understood that the alignment assembly disclosed herein can be used on various types of power steering systems for various types of work machines, as well as machines of other types.

Power steering system 200 is anchored within operator cab 104 by a column support 110 anchored to operator cab 104 at connections 112. Pivotal connections 114 connect column support 110 to an adjustable steering column housing 116. The in-cab portion of power steering system 200 is anchored to cab 104 by anchors 118.

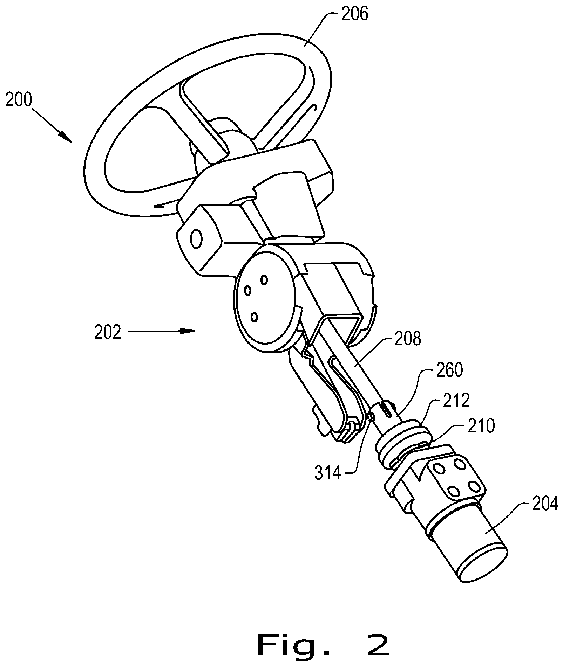

Referring now also to Fig. 2, power steering system 200 includes a steering column 202 operatively connected to a power steering hydraulic steering unit 204 connected to cab 104 by anchors 118. Steering column 202 includes a steering wheel 206, a steering shaft 208 and a steering shaft alignment assembly 210 connected to hydraulic steering unit 204. A power steering damping assembly 212 is operatively disposed between steering shaft 208 and steering alignment assembly 210. Damping assembly 212, as to be described hereinafter, works advantageously with alignment assembly 210; however, alignment assembly 210 can be used also with other connecting elements to steering shaft 208, which may be affixed in one way or another to operator cab 104.

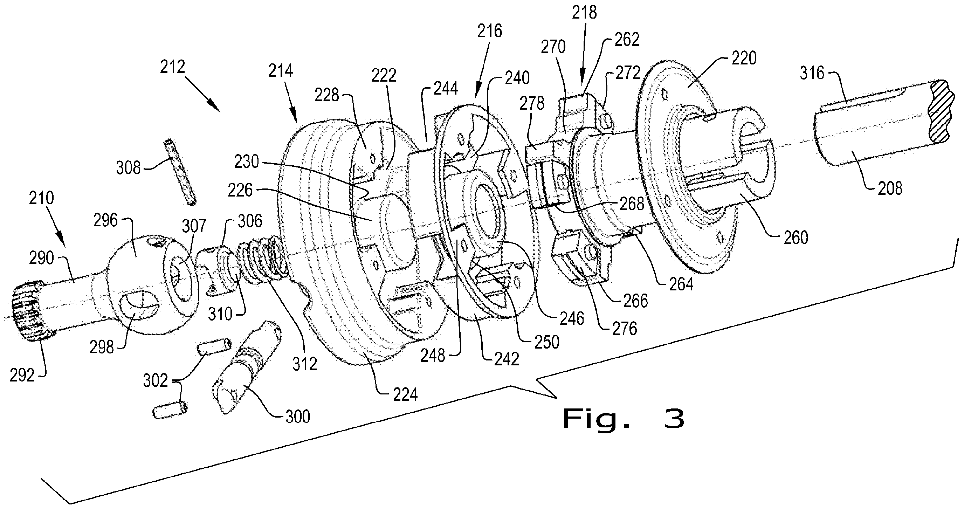

Referring now to Figs. 3-6, power steering damping assembly 212 includes a flywheel 214, an axial/transverse damper 216, a rotor 218 and a cover 220. Flywheel 214 is an open-ended, somewhat bowl-like housing for receiving axial/transverse damper 216 and rotor 218 therein. Rotor 218 nests within axial/transverse damper 216, which itself nests within flywheel 214. Cover 220 is attached to flywheel 214 with axial/transverse damper 216 and rotor 218 nested therein. Accordingly, torsional, axial and translational dampers are contained within the compact assembly of flywheel 214 and cover 220.

In a preferred embodiment, flywheel 214 is made of metal or other rigid, strong material. Flywheel 214 includes a bottom 222 and a generally cylindrical side 224. A center post 226 projects from bottom 222. Peripheral pediments 228 are spaced from center post 226 and from one another about the periphery of flywheel 214 as defined by side 224. Flywheel 214 thereby defines there within a four-lobed cavity 230 between side 224 and center post 226, the lobes of cavity 230 being spaces between and among pediments 228. Cavity 230 is configured to receive axial/transverse damper 216 therein.

Flywheel 214 can be used to attenuate vibration and sound conveyed into cab 104 by controlling the weight and dimensions of flywheel 214 relative to the vibration frequency of the hydraulic steering unit 204. In conventional arrangements, the natural frequencies of components in steering column 202 can approach the range of vibration frequencies from hydraulic steering unit 204 such that noise and vibration are transmitted through resonance and amplified. Flywheel 214 provides a readily configurable mass for which the composition, weight and dimensions can be selected by design to have a natural frequency outside the frequency range annoying to human operators. For example, by changing the size and mass of flywheel 214, the natural frequency of flywheel 214 can be controlled to be lower than the frequency range generated by the operation of hydraulic steering unit 204, thereby attenuating resonant transmission of vibrations from hydraulic steering unit 214. More specifically, if hydraulic steering unit 214 generates frequencies in the range of 110-540 Hz, designing flywheel 214 with mass and dimensions for a natural frequency of less than 100 Hz can achieve desired attenuation.

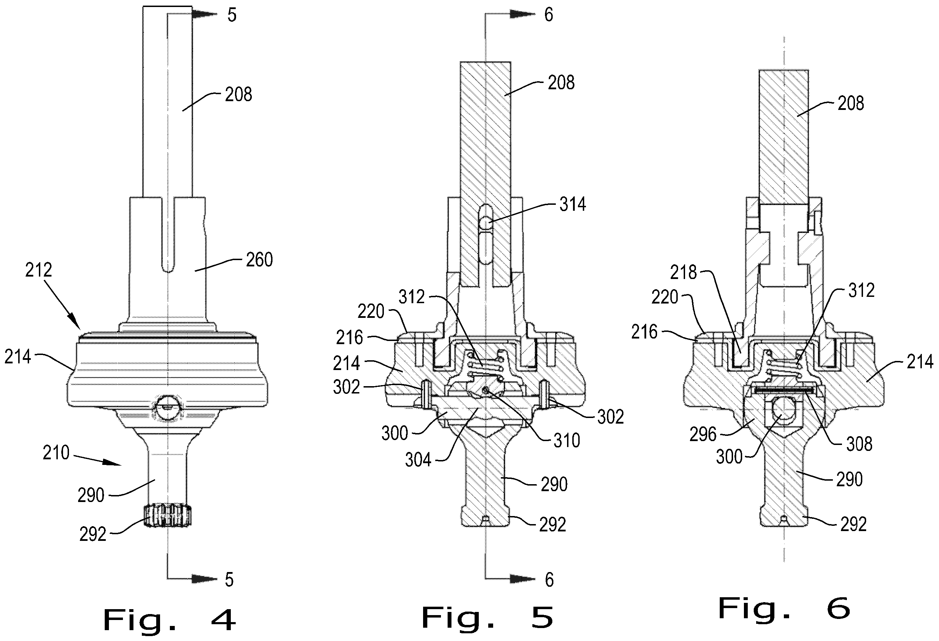

Axial/transverse damper 216 is made of rubber or other resilient material shaped to nest within cavity 230 and cover a substantial portion of the inner surfaces of flywheel 214. Accordingly, axial/transverse damper 216 includes a bottom 240, and a side 242. Side 242 includes cutout indentations 244 configured to surround pediments 228 while exposing the side surfaces thereof. A center cylinder 246 projects from bottom 240 and is both sized and shaped to slide over center post 226. Axial/transverse damper 216 defines pediment covers 248 extending inwardly from side 242 near the outer edge thereof, thereby spaced from bottom 240 and from center cylinder 246. Pediment covers 248 are spaced from one another about the periphery of axial/transverse damper 216 as defined by side 242. Pediment covers 248 cover the outer end surfaces of pediments 228, leaving the side surfaces of pediments 228 exposed in cutout indentations 244. Axial/transverse damper 216 thereby defines an annular, open ended cavity 250 above bottom 240 and between side 242 and center cylinder 246, the cavity 250 being interrupted by cutout indentations 244. Cavity 250 is configured to receive rotor 218 therein. As can be seen in Figs. 5 and 6, axial/transverse damper 216 substantially covers the inner surfaces of flywheel 214 except for the exposed side surfaces of pediments 228, and provides a cushion between flywheel 214 and rotor 218. Accordingly, axial/transverse damper 216 provides cushioning or dampening against the transmission of vibrations from flywheel 214 to rotor 218, and primarily the axial and transverse vibrations.

Rotor 218 includes an axially extending, bifurcated collar 260 that extends through cover 220 and is configured to receive steering shaft 208 therein. Rotor 218 further defines four radially extending arms 262, 264, 266, 268 from a central hub 270. As thus far described, rotor 218 can be of metal or other strong, rigid material. Arms 262, 264, 266, 268 are associated with dampers 272, 274, 276, 278, the dampers being made of rubber or other resilient material. Dampers 272, 274, 276, 278 are rotational dampers operative when steering wheel 206 is rotated either clockwise or counterclockwise. Accordingly, dampers 272, 274, 276, 278 are positioned on alternating sides of arms 262, 264, 266, 268 such that during clockwise rotation of rotor 218, two dampers 272, 276 are carried forward of the respective arms 262, 266 with which they are associated, and during counterclockwise rotation of rotor 218 the other two dampers 274, 278 are carried forward of the respective arms 264, 268 with which they are associated. Hub 270 and arms 262, 264, 266, 268 thereof, together with dampers 272, 274, 276, 278 associated therewith, are sized, shaped and configured to fit within cavity 250 of axial/transverse damper 216, as limited by pediments 228 exposed therein.

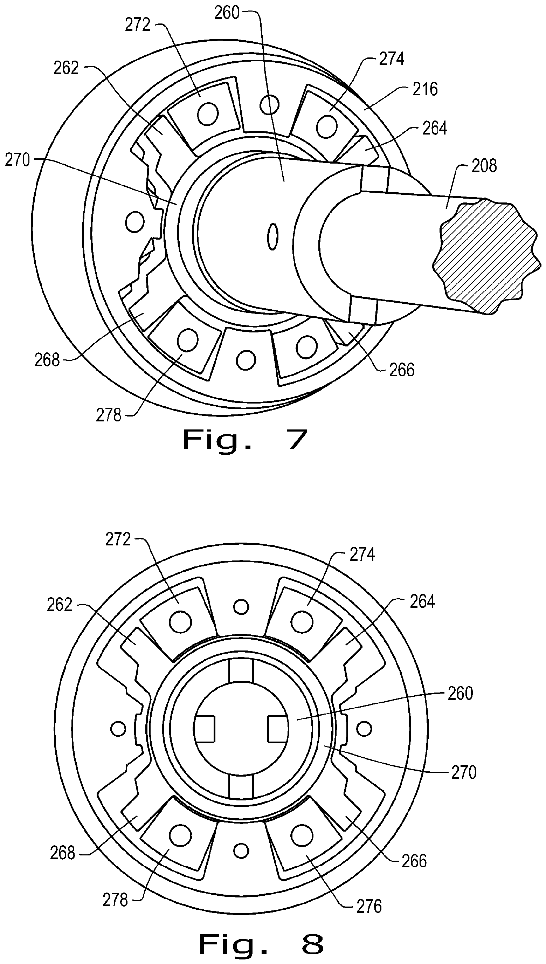

With reference now more particularly to Figs. 7-10, the operation of damping assembly 212 will be described. References made herein to a "forward rotational direction" of any of the dampers 272, 274, 276, 278 is intended to mean the rotational direction in which the damper leads the support arm 262, 264, 266, 268 with which it is associated. Accordingly, the forward rotational direction of dampers 272, 276 is clockwise rotation of rotor 218, and the forward rotational direction of dampers 274, 278 is counterclockwise rotation of rotor 218. Further, during clockwise rotation, dampers 272, 276 may be referred to as leading dampers and dampers 274, 278 may be referred to as trailing dampers with respect to the arms 262, 266, 264, 268 with which they are associated. During counterclockwise rotation, dampers 274, 278 are leading dampers and dampers 272, 276 are trailing dampers with respect to the rotor arms 264, 268, 262, 266 with which they are associated.

Upon rotation of rotor 218 in the forward rotational direction of a damper, the damper confronts a peripheral pediment 228 of flywheel 214 exposed in a cutout indentation 244 of axial transverse damper 216. Leading faces of dampers 272, 274, 276, 278 are backwardly reclined relative to the confronting faces of pediments 228 in the forward rotational directions, and trailing faces of the dampers 272, 274, 276, 278 are forwardly inclined relative to the confronting faces of the arm 262, 264, 266, 268 associated therewith. A minimal preload compression is provided of dampers 272, 274, 276, 278 between associated arms 262, 264, 266, 268 and the pediments 228.

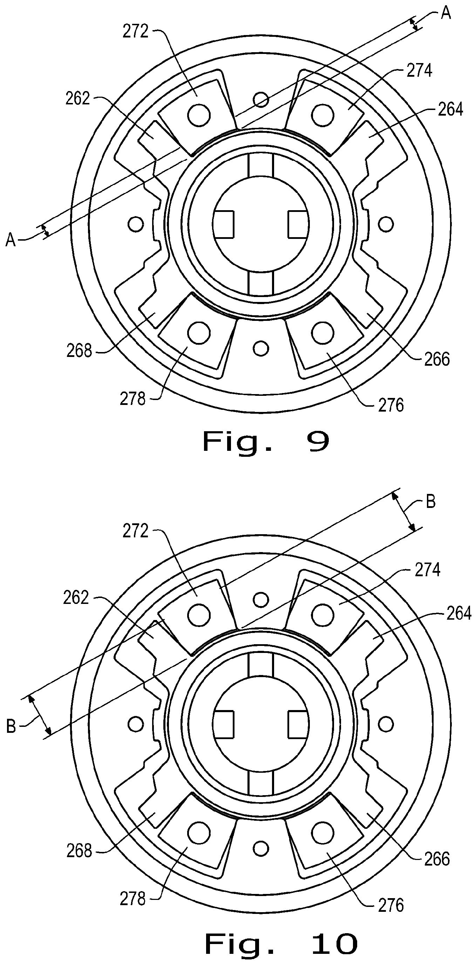

Accordingly, as shown in Figs. 7-9 without rotation of rotor 218 (that is, with steering wheel 206 centrally positioned) minimal contact areas exist between each of the dampers 272, 274, 276, 278 and the arm 262, 264, 266, 268 associated therewith, and with the pediment 228 immediately ahead in the forward rotational direction. As a result, the damper is in a soft condition and will dampen torsional vibrations from hydraulic steering unit 204. Upon the application of increased torsional force from turning steering wheel 206 in either direction, the forward facing, leading dampers begin to compress, thereby increasing the contact areas with the adjacent arms and encountered pediments. As the contact areas increase, torsional resistance increases as well, and the responsiveness of hydraulic steering unit 204 to the rotation of steering wheel 206 is maintained. Figs. 9 and 10 illustrate the minimal contact areas "A" and the increased contact areas "B" for one of the clockwise dampers (272) that occurs from clockwise rotation. It should be understood that a similar change has also occurred for the other clockwise damper (276) in Fig. 10; and that similar changes will occur on the counterclockwise dampers (274, 278) when rotated in the forward rotational directions thereof.

In addition to or in place of the angular orientation of the faces of dampers 272, 274, 276, 278; the arms 262, 264, 266, 268 also can be shaped to affect the changes in contact areas upon rotation of rotor 218. Material selections for the contacting surfaces also can be selected with desired characteristics influencing the change in torsional resistance. With the damper assembly described herein, the change of torsional resistance is highly controllable. It is even possible to provide one rate of change for clockwise rotation and a different rate of change for counterclockwise rotation by selecting desirable materials and shaping the contacting surfaces to achieve the desired result.

While the exemplary embodiment has been shown and described with rotor 218 including four arms 262, 264, 266, 268; two clockwise dampers 272, 276 and two counterclockwise dampers 274, 278; it should be understood that more or fewer arms/or dampers can be used. By way of examples, a single clockwise arm and damper and a single counterclockwise arm and damper can be provided; or three or more of each can be used. Further, it is not necessary that clockwise and counterclockwise rotation be provided with equal numbers of dampers. If so desired, either direction can be provided with more or fewer dampers than the other. The dampers can behave differently for clockwise rotation and counterclockwise rotation of the steering shaft, if such a difference is desired.

It should be appreciated that the open, bowl-like structures of flywheel 214 and axial/transverse damper 216 to receive rotor 218 and the torsional dampers allows for easy assembly of the entire damper assembly.

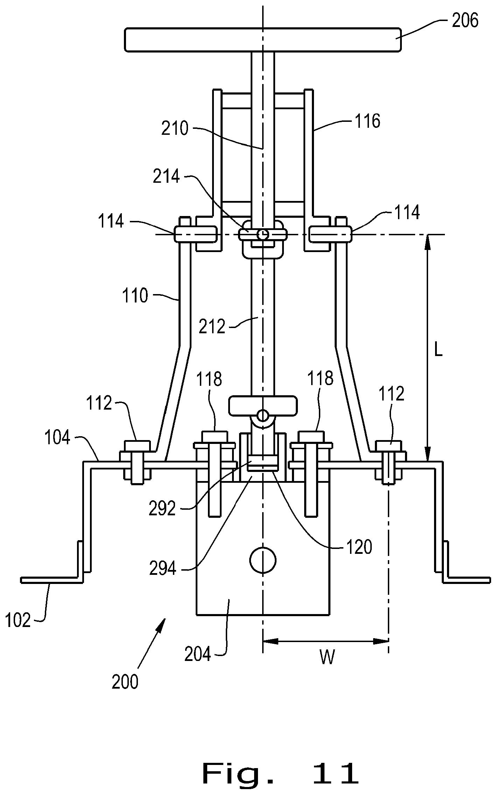

With reference now to Fig. 11, it can be appreciated that the interface of operator cab 104 with column support 110, steering column 202 and hydraulic steering unit 204, if varied from design tolerances, can interrupt proper alignment of steering shaft 208 with hydraulic steering unit 204 and the provision of a proper space 120 in the connection of the steering column 202 to the hydraulic steering unit 204. More specifically, proper alignment and provision of an adequate space 120 can be affected by the relationships between a dimension "W" representing the width between the axis of steering column 202 and support connections 112 and a dimension "L" representing the length from the anchor surface of cab 104 to the pivotal connections 114. Proper alignment and the adequacy of space 120 are important to minimize vibration transmission through steering column 202 and the generation of noise from the interface of cab 104 with power steering system 200.

Steering shaft 208 is segmented, with a proximal portion 210 and a distal portion 212 connected at a cardan joint 214 aligned with pivotal connections 214, to allow pivoting adjustment within steering shaft 208 for adjusting the relative position of steering wheel 206 to an operator of work machine 10.

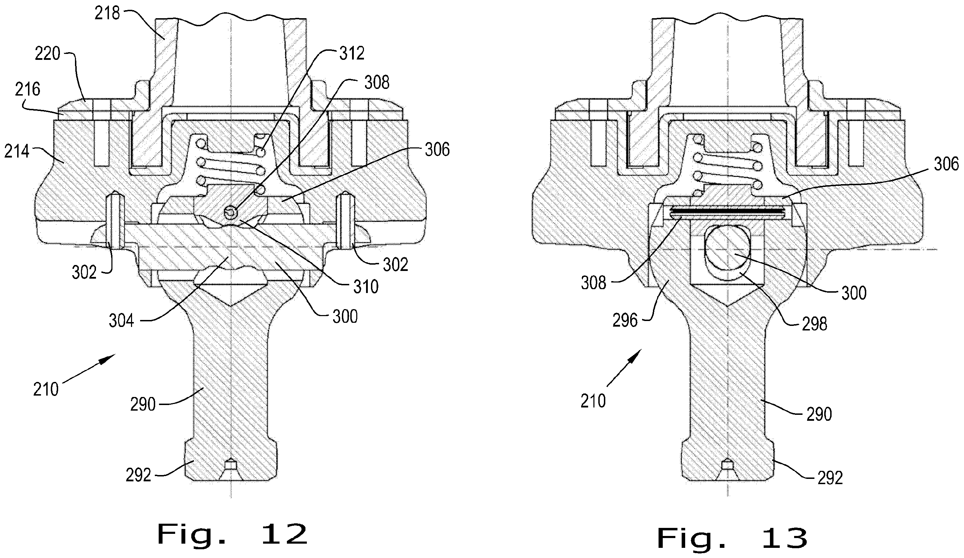

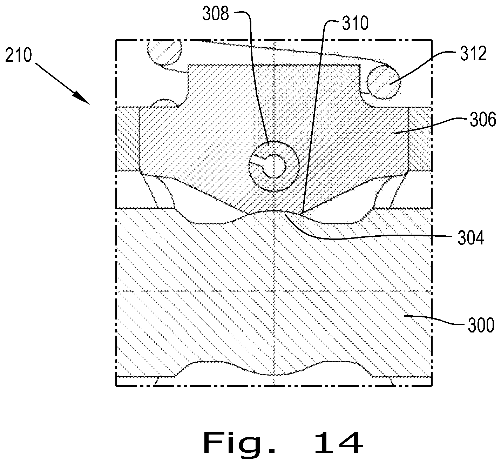

Referring again primarily to Fig. 3 and additionally Figs. 4-6 and 12-14, steering shaft alignment assembly 210 provides simple articulation for small movements, and provides self-aligning features. A stub connector 290 includes a gear 292 at the distal end thereof engaged in a receiver 294 of hydraulic steering unit 204 (Fig. 11). To accommodate variations in the relative position of stub connector 290, gear 292 is of a generally spherical shape externally to accommodate operation in receiver 294 which is of a generally cylindrical shape even when stub connector 290 and gear 292 are somewhat misaligned axially with receiver 294. Individual gear elements or teeth of gear 292 are of sufficient strength across the shapes thereof for transmitting the required torque even when so misaligned. Space 120 is maintained between the end of gear 292 and a confronting base surface of receiver 294. A globular element 296 at the proximal end of stub connector 290 is hollow and a transverse opening 298 therethrough. A shaft 300 extends through transverse opening 298, and is secured by pins 302. At a center portion 304 thereof, shaft 300 is smoothly curved outwardly. A pivot 306 is held in an axial opening 307 in proximal end globular element 296 and is secured by a pin 308. The inside of pivot 306 defines a smoothly curved part 310 to cooperate with the curved portion 304 of shaft 300. The contact between curved center portion 304 and curved part 310 provides ready relative rolling rotation between shaft 300 and pivot 304. A spring 312 urges pivot 306 to maintain contact between pivot 306 and shaft 300, as can be seen most clearly in Figs. 12 and 14.

Damper assembly 212 provides sufficient flexing ability to compensate for misalignment caused by variations in the aforedescribed dimensions "W" and "L". The rolling surface contact between shaft 300 and pivot 306 allows for automatic compensation of misalignment easily and quickly.

Linear adjustment of the length of steering column 202 is enabled by steering shaft 208 received in and connected to bifurcated collar 260. Steering shaft 208 is held in its adjusted position relative to bifurcated collar 260 by a fastener 314, such as a bolt (Fig. 2), extending through bifurcated collar 260 and received in an axially extending channel 316 of shaft 208 (Fig. 3). Fastener 314 is in fixed position relative to collar 260, and the effective length of steering shaft 208 is adjusted by sliding steering shaft 208 more extensively into or out of collar 260, with the position of fastener 314 in channel 316 thereby changing. Fastener 314 is used to hold steering shaft 208 by clamping force of bifurcated collar 260. Accordingly, the effective length of steering column 202 can be changed to maintain the required space 120 at the end of stub connector 290 in receiver 294.

While this invention has been described with respect to at least one embodiment, the present invention can be further modified within the scope of this disclosure. This application is therefore intended to cover any variations, uses, or adaptations of the invention using its general principles. Further, this application is intended to cover such departures from the present disclosure as come within known or customary practice in the art to which this invention pertains and which fall within the limits of the appended claims.

## Claims

1. An alignment assembly (210) for a power steering system (200) having a hydraulic steering unit (204) and a steering column (202) connected to the power steering unit (204), the steering column (202) including a steering shaft (208); wherein:
the alignment assembly (210) forms the connection of the steering shaft (208) to the hydraulic steering unit (204);
the alignment assembly includes a connector (290) disposed between the steering shaft (208) and the hydraulic steering unit (204);
a distal end (292) of the connector (290) is connected to the hydraulic steering unit (204); and
a proximal end (296) of the connector (290) is connected in the steering column (202) by a rolling connection;
the assembly being **characterized by**:
a spring (312) biasing an interface of the proximal end (296) in the steering column (202).

2. The alignment assembly (210) of claim 1, wherein:
said proximal end (296) defines a transverse opening (298);
a shaft (300) extends through said transverse opening;
said proximal end (296) comprises a globular element which is hollow and includes an axial opening (307) thereto; and
a pivot (306) extends into said axial opening (307) and engages said shaft (300).

3. The alignment assembly (210) of claim 2, wherein:
an interface of said shaft (300) and said pivot (306) includes confronting smoothly curved surfaces (304, 310).

4. The alignment assembly (210) of either of claims 2 and 3, further **characterized by**:
a spring (312) biasing said pivot (306) against said shaft (300).

5. The alignment assembly (210) of any of claims 1-4, further **characterized by**:
an axial adjustment configuration (208, 260, 314, 316) in the steering column (202).

6. The alignment assembly (210) of claim 5, wherein:
said axial adjustment configuration includes a collar (260);
an end of said steering shaft (208) is received in said collar (260); and
a fastener (314) extends through said collar (260) and said steering shaft (208).

7. The alignment assembly (210) of claim 6, wherein: said end of said steering shaft (208) includes a channel (316) extending axially in said steering shaft (208).

## Patentansprüche

1. Ausrichtungsanordnung (210) für ein Servolenkungssystem (200), das eine hydraulische Lenkeinheit (204) und eine Lenksäule (202) aufweist, die mit der Servolenkeinheit (204) verbunden ist, wobei die Lenksäule (202) eine Lenkwelle (208) umfasst; wobei:
die Ausrichtungsanordnung (210) die Verbindung der Lenkwelle (208) mit der hydraulischen Lenkeinheit (204) bildet;
die Ausrichtungsanordnung ein Verbindungsglied (290) umfasst, das zwischen der Lenkwelle (208) und der hydraulischen Lenkeinheit (204) angeordnet ist;
ein distales Ende (292) des Verbindungsglieds (290) mit der hydraulischen Lenkeinheit (204) verbunden ist; und
ein proximales Ende (296) des Verbindungsglieds (290) mittels einer Wälzverbindung mit der Lenksäule (202) verbunden ist;
die Anordnung **gekennzeichnet ist durch**:
eine Feder (312), die eine Schnittstelle des proximalen Endes (296) in der Lenksäule (202) vorspannt.

2. Ausrichtungsanordnung (210) nach Anspruch 1 wobei:
das proximale Ende (296) eine Queröffnung (298) definiert;
sich eine Achse (300) durch diese Queröffnung erstreckt;
das proximale Ende (296) ein kugelförmiges Element umfasst, das hohl ist und eine axiale Öffnung (307) durch dieses umfasst; und
sich ein Drehelement (306) in die axiale Öffnung (307) erstreckt und die Achse (300) erfasst.

3. Ausrichtungsanordnung (210) nach Anspruch 2, wobei:
eine Schnittstelle der Achse (300) und des Drehelements (306) sich gegenüberliegende, sanft gewölbte Flächen (304, 310) umfasst.

4. Ausrichtungsanordnung (210) nach einem der Ansprüche 2 und 3, weiterhin **gekennzeichnet durch**:
eine Feder (312), die das Drehelement (306) gegen die Achse (300) vorspannt.

5. Ausrichtungsanordnung (210) nach einem der Ansprüche 1 bis 4, weiterhin **gekennzeichnet durch**:
eine axiale Ausrichtungsanordnung (208, 260, 314, 316) in der Lenksäule (202).

6. Ausrichtungsanordnung (210) nach Anspruch 5, wobei:
die axiale Ausrichtungsanordnung eine Manschette (260) umfasst;
ein Ende der Lenkwelle (208) in der Manschette (260) aufgenommen ist; und
sich ein Befestigungsmittel (314) durch die Manschette (260) und die Lenkwelle (208) erstreckt.

7. Ausrichtungsanordnung (210) nach Anspruch 6, wobei:
das Ende der Lenkwelle (208) eine Nut (316) umfasst, die sich axial in der Lenkwelle (208) erstreckt.

## Revendications

1. Ensemble d'alignement (210) pour système de direction assistée (200) pourvu d'une unité de direction hydraulique (204) et d'une colonne de direction (202) reliée à l'unité de direction assistée (204), la colonne de direction (202) comprenant un arbre de direction (208) ; dans lequel :
l'ensemble d'alignement (210) relie l'arbre de direction (208) et l'unité de direction hydraulique (204) ;
l'ensemble d'alignement comprend un connecteur (290) disposé entre l'arbre de direction (208) et l'unité de direction hydraulique (204) ;
une extrémité distale (292) du connecteur (290) est reliée à l'unité de direction hydraulique (204) ; et
une extrémité proximale (296) du connecteur (290) est reliée à la colonne de direction (202) par l'intermédiaire d'une liaison de roulement ;
l'ensemble étant **caractérisé par** :
un ressort (312) inclinant une interface de l'extrémité proximale (296) dans la colonne de direction (202).

2. Ensemble d'alignement (210) selon la revendication 1, dans lequel :
ladite extrémité proximale (296) définit une ouverture transversale (298) ;
un arbre (300) s'étend à travers ladite ouverture transversale ;
ladite extrémité proximale (296) comprend un élément globulaire creux qui comprend une ouverture axiale (307) connectée à celle-ci ; et
un pivot (306) s'étendant à travers ladite ouverture axiale (307) et entrant en contact avec ledit arbre (300).

3. Ensemble d'alignement (210) selon la revendication 2, dans lequel :
une interface dudit arbre (300) et dudit pivot (306) comprend des surfaces opposées légèrement courbées (304, 310).

4. Ensemble d'alignement (210) selon l'une quelconque des revendications 2 et 3, **caractérisé en outre par** :
un ressort (312) inclinant ledit pivot (306) contre ledit arbre (300).

5. Ensemble d'alignement (210) selon l'une quelconque des revendications 1 à 4, **caractérisé en outre par** :
une configuration de régulation axiale (208, 260, 314, 316) dans la colonne de direction (202).

6. Ensemble d'alignement (210) selon la revendication 5, dans lequel :
ladite configuration de régulation axiale comprend un collier (260) ;
une extrémité dudit arbre de direction (208) est logée dans ledit collier (260) ; et
un fixateur (314) s'étend à travers ledit collier (260) et ledit arbre de direction (208).

7. Ensemble d'alignement (210) selon la revendication 6, dans lequel :
ladite extrémité dudit arbre de direction (208) comprend un canal (316) s'étendant axialement dans ledit arbre de direction (208).
